# EUROPEAN PATENT SPECIFICATION

(11) **EP 2 671 372 B1**
(45) Date of publication and mention of the grant of the patent: **01.04.2015**
(21) Application number: 12701525.3
(22) Date of filing: 31.01.2012
(51) Int. Cl.: H04M 3/32, H04W 24/08

(54) **A SYSTEM FOR DETECTION OF A BYPASS OF AN INTERCONNECT TO A TELECOMMUNICATION NETWORK**
SYSTEM ZUR ERKENNUNG EINER UMLEITUNG EINER VERBINDUNG ZU EINEM TELEKOMMUNIKATIONSNETZ
SYSTÈME DE DÉTECTION D'UNE DÉRIVATION D'UNE INTERCONNEXION À UN RÉSEAU DE TÉLÉCOMMUNICATIONS

(30) Priority: 02.02.2011 EP 11153026
(43) Date of publication of application: 11.12.2013
(73) Proprietor: Meucci Solutions NV, 9050 Gent-Ledeberg (BE)
(72) Inventor: VAN DER MEEREN, Guy, B-9052 Zwijnaarde (Gent) (BE)
(74) Representative: Plas, Axel Ivo Michel
(86) International application number: PCT/EP2012/051524
(87) International publication number: WO 2012/104283

(56) References cited:
- US-A1- 2009 069 047
- US-A1- 2010 087 191

## Description

### Field of the Invention

The present invention generally relates to a system for detection of an interconnect bypass in telecommunication networks, especially in wireless telecommunication networks such as for example of the type GSM, UMTS or similar, but also in wired telecommunication networks.

### Background of the Invention

When a telecommunication network operator provides access from his network to a network of another telecommunication network operator and vice versa, both operators, by means of agreement or sometimes subject to regulatory requirements, set up a suitable interconnection facility which is subjected to extensive testing in order to assess technical reliability and the quality of service of the interconnection facility so that the agreed upon or regulatory standards are met. Next to the technical arrangements there are in many cases also interconnection charges that the telecommunication network operator receiving a call charges for the calls passing through the interconnection facility. When a calling party calls from another telecommunication network to the network of the telecommunication network operator of the receiving party, for example because the calling party is a client of another network operator than the receiving operator or because the calling party is abroad and is making use of a partnering network operator that provides roaming services for its network operator, this call has to pass through the interconnection facility.

Sometimes there are attempts to bypass the interconnection facilities of the network operator in an attempt to make money by avoiding at least a part of the interconnection charges. These attempts are made by bypass operators that reroute a part of the traffic of calling parties within the network of another operator to the network of the receiving operator without going through the interconnection facility. Generally these bypass operators make use of end user facilities from the receiving operator.

This leads to a direct loss of revenue for the receiving network operators and this leads to technical problems. First of all as the bypass operator uses end user facilities to provide a network interconnection. Furthermore the use of these end user facilities and the setup of a new call creates an additional interface. Therefor there is a serious risk of quality problems such as degraded quality of audio or data transmissions, interruptions during the call, a prolonged waiting time during the call initiation, unacceptable delays in the transmissions, .... Further, because of the bypass operators reroute the call by setting up a new call making use of end user facilities of the receiving operator, the CLI of the calling party will be replaced with the CLI of the new call. This leads to inconveniences for the receiving parties which receive an erroneous or no CLI, but can also have more serious safety issues involved when a call to emergency services or police is involved. Furthermore this also creates serious technical difficulties for automatic telephone switchboards that operate on the basis of the CLI of the incoming call.

A system for setting up test calls in a telecommunication network is known from for example WO99/01974 and WO2008/071857. These call charge verification systems generate a series of calls between different sites on one or more networks to enable the network operator to check the billing procedure of the network. These systems however rely on collection of billing data produced by the operator in order to extract data, such as for example the CLI for analysis. Therefor these systems require access to sensitive data of the telecommunication network operator. This data is sensitive because it is related to the calling behaviour of its customers which might be subjected to privacy regulations or because it relates to billing information which is considered as commercial know how of the telecommunication network operator. These problems are especially relevant if the call charge verification system is operated by third parties that offer such system as a service to the telecommunication network operator. As then extensive access by these third parties to information of the telecommunication network operator requires specific interfaces to be developed to provide access to the billing information for each specific telecommunication network operator. This is time and resource intensive and makes it difficult to scale the verification system to multiple telecommunication network operators.

A known system that overcomes the abovementioned drawbacks is the Meucci system as described on their website: http-//www.meucci-solutions.com. This system for detection of a bypass of an interconnect to a telecommunication network under test comprises means adapted to originate a test call to said telecommunication network under test from outside the telecommunication network under test and at least one receiver probe with a subscription for terminating said test call. Further this system comprises a control system configured to initiate the test call; receive from the receiver probe call information comprising a received calling line identification (CLI) of the test call; and analyse the received calling line identification (CLI) such that presence of the bypass can be detected. The Meucci system does not require an interface with the billing system. However in this case difficulties can arise for detecting and disabling a bypass when the bypass operator makes use of the CLIR function in order to mask the calling line identification of the subscriptions used in their bypass equipment as will be explained in further detail below.

US2010/0087191 mentions in its prior art section the existence of CLI based bypass detection systems that make use of a subscription being configured with calling line identification restriction override (CLIRO). This document further describes a CLI based bypass detection system that requires test call data from both the originating side and the terminating side of the test call to be compared. Furthermore the disclosed system relies on timing information such as the time of initiation of the test call and the duration of the test call in order to be able to match originating and terminating call data that is available in roaming records and call data records. This is computationally intensive operation and it is not clear how this could be performed in real time, this means during the execution of a specific test call. Furthermore the system disclosed requires roaming subscription to the network under test. The disclosed system further also requires access to call data records and roaming records which might contain sensitive client data or commercial data that the operator of the telecommunication network under test does not want to disclose to third parties.

US2009/0069047 discloses a SIM box detection system that is based on statistical analysis of the call data records in order to detect a so-called wireless bypass signature. Such a system is not capable of a real time detection of a bypass and requires access to large amounts of sensitive subscriber data of the operator of the telecommunication network under test.

As such there is a need for a simple and robust system that can provide real time information about the availability of a bypass. This system should be able to be operated by third parties and should not require access to sensitive data of the telecommunication network operator nor should it require the interfaces to enable such access. The system should also allow identification and/or disabling of one or more subscriptions used in the bypass, even if the bypass operator makes use of the CLIR function in order to mask the calling line identification of the subscriptions used in their bypass equipment. Furthermore there remains the need for a system with reduced needs for test call data and computational resources.

### Summary of the Invention

According to a first aspect of the invention there is provided a system for detection of a bypass of an interconnect to a telecommunication network, the system comprising:
- means adapted to originate a test call to or through a telecommunication network under test from outside the telecommunication network under test;
- at least one receiver probe with a subscription for terminating the test call, the subscription being configured with calling line identification restriction override; and
- a control system configured to:
   ∘ initiate the test call;
   ∘ receive from the receiver probe call information comprising a received calling line identification of the test call; and
   ∘ detect the presence of the bypass by analysing the received calling line identification,
CHARACTERISED IN THAT
the control system is further configured to detect the presence of the bypass if the received calling line identification belongs to a subscription to the telecommunication network under test.

This advantageously enables a simple and robust system for detection of a bypass that is able to detect a bypass even if the bypass operator makes use of a calling line identification restriction (CLIR) function in order to hide the CLI from detection. This enables to identify and subsequently disable the subscriptions that are being used in a bypass even if the bypass operator makes use of the CLIR function. When third parties provide the system for detection of a bypass as a service to a telecommunication network operator this requires neither access to sensitive data like for example billing date nor complex technical interfaces to provide that access. The third party only requires a subscription configured with CLIRO for terminating the test call.

This system further does not require complex computations nor extensive amounts of data to be able to detect the existence of a bypass. The control system only needs to analyse the received calling line identification (CLI) it receives from the receiver probe. No further information such as information regarding the originating side of the test call such as for example the calling party number is required for the analysis. There is also no longer a need for precisely scheduling the test calls at the originating side and no synchronisation of the originating means and the receiver probe is required in order to perform the test call. The advantageously reduced requirements for data and computational resources of the system according to the invention do not lead to any compromise in terms of robustness for detection of a bypass. The system according to the invention is able to reliably detect a bypass for every test call for which the received calling line identification belongs to a subscription of the telecommunication network under test.

According to an embodiment of the invention the subscription of the receiver probe (20) is a subscription to the telecommunication network (50) under test.

This allows for a straight forward setup that does not need a direct interface with the systems of the operator of the telecommunication network under test. It is often possible for third parties which monitor the presence of a bypass to obtain a subscription configured with CLIRO from the operator of the network under test.

According to an alternative embodiment of the invention:
- the subscription of the receiver probe is a subscription to a telecommunication network other than the telecommunication network under test; and
- the telecommunication network under test comprises a forwarding subscription which forwards the test call to the receiver probe.

As such a reliable detection of a bypass located in the telecommunication network under test becomes possible even in conditions in which there is only available a subscription configured with CLIRO for a telecommunication network outside the telecommunication network under test.

According to still a further embodiment of the invention:
- the means is further adapted to originate the test call to or through the telecommunication network under test from outside the telecommunication network under test, and additionally from outside a further telecommunication network under test,
   ∘ the further telecommunication network under test being a telecommunication network other than the telecommunication network under test; and
- the control system is further configured to detect the presence of the bypass if the received calling line identification belongs to a subscription to the further telecommunication network under test.

This embodiment makes it possible to advantageously detect the presence of the so called 'other operator' bypass by analysing the CLI in such a way that real time detection of such a bypass is possible and without requiring a direct interface with the data or the technical systems of the operator of the further network under test.

According to still a further embodiment of the invention:
- the subscription of the receiver probe is a subscription to the further telecommunication network under test; and
- the means is further adapted to originate the test call to the subscription of the receiver probe;
- the control system is further configured to detect the presence of an off-net bypass if the received calling line identification belongs to a subscription to the telecommunication network under test.

This embodiment allows for a simple, reliable and real-time detection of an off-net bypass without requiring direct access to data or technical interfaces to the network under test nor to the further telecommunication network under test. Such off-net bypasses required complex analysis on extensive sets of data of multiple telecommunication network operators in prior art systems.

According to an embodiment of the invention the detection of the bypass is implemented by checking if the received calling line identification (CLI) comprises a prefix which belongs to the numbering plan of the telecommunication network under test or alternatively by checking if the received calling line identification (CLI) comprises a number which is comprised in the number database of said telecommunication network under test. This is a simple and reliable way to detect the presence of a bypass that is based on the insight that such a bypass makes use of a subscription to the network under test.

According to still a further embodiment of the invention the telecommunication network under test is located in a country with an associated country code, the means is adapted to originate the test call from a country other than the country of the telecommunication network under test, and the control system is further configured to detect the presence of the bypass if the received calling line identification comprises the same country code as the country code associated with said telecommunication network under test.

This allows for a fast and flexible detection that requires little computing power and a low amount of data to be transferred to the control system. It furthermore increases flexibility with respect to the means for originating test calls, as not only probes that are directly controlled by the control system qualify, but also any means, operated automatically or manually that can originate test calls in a scheduled, unscheduled, ad hoc or random way.

According to a second aspect of the invention there is provided a method for detecting a bypass of an interconnect to a telecommunication network, the method comprising the steps of:
- a means originating a test call to or through the telecommunication network under test from outside the telecommunication network under test;
- at least one receiver probe with a subscription being configured with calling line identification restriction override terminating the test call; and
- a control system initiating the test call; receiving from the receiver probe call information comprising a received calling line identification of the test call; and detecting the presence of the bypass by analysing the received calling line identification,
CHARACTERISED IN THAT
the control system detects the presence of the bypass if the received calling line identification belongs to a subscription to the telecommunication network under test.

According to an embodiment said method further comprises the steps of initiating, originating, receiving and analysing a plurality of test calls between a plurality of means and a plurality of predetermined receiver probes.

According to a further embodiment said method further comprises the steps of:
- a scan phase wherein a first amount of the plurality of test calls is initiated at a first rate thereby identifying a bypass; and
- a shoot phase wherein a second amount of the plurality of test calls is initiated at a second rate only using predetermined means and predetermined receiver probes that are capable of passing through the bypass identified in the scan phase, the second amount and rate being higher than the first amount and rate respectively.

According to a third aspect of the invention there is provided a control system for use in a system according to the first aspect of the invention, characterised in that the control system is configured to:
- receive call information comprising a received calling line identification of the test call from the receiver probe comprising the subscription for terminating the test call, the subscription being configured with calling line identification restriction override;
- detect the presence of the bypass by analysing the received calling line identification,
CHARACTERISED IN THAT
the control system is further configured to detect the presence of the bypass if the received calling line identification belongs to a subscription to the telecommunication network under test.

According to a fourth aspect of the invention there is provided a receiver probe for use in a system according to the first aspect of the invention, characterised in that the receiver probe comprises the control system according to the third aspect of the invention.

This allows for a distributed setup of the control system that is able to advantageously make use of the computational resources that are already available within the hardware of the receiver probes.

### Brief Description of the Drawings

Fig. 1 illustrates an embodiment according to the invention without the presence of a bypass;
Fig. 2 illustrates the embodiment according to Figure 1 with the presence of a bypass;
Figures 3 to 5 illustrate a further embodiment according to the invention with the presence of a bypass.

### Detailed Description of Embodiment(s)

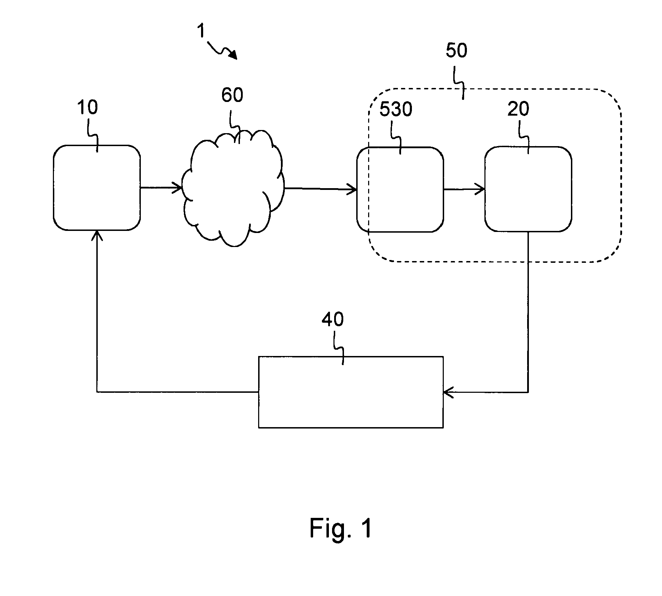

Figure 1 shows a system 1 for detection of a bypass of an interconnect 530 to a telecommunication network 50 under test. The system 1 according to the invention comprises a means 10 to originate a test call to said telecommunication network 50 under test from outside the telecommunication network 50 under test. This means 10 can be a suitable sender probe such as for example a GSM mobile phone or any other type of device capable of initiating a call on a predetermined outside telecommunication network other than the telecommunication network 50 of the network operator that is undertaking the investigation regarding the presence of a bypass of an interconnect 530, such as for example calling cards, a telephone number providing access to voip systems, call back mechanisms, any type of pc originating calls, a suitable subscription to mobile networks such as for example a SIM card, wireline networks or call generators directly connected to telecommunication network equipment. The means 10 can comprise for example a fixed line subscription in the UK "+44 20 1234 5678" and the telecommunication network 50 under test can for example be a telecommunication network of a Belgian mobile operator with a numbering plan with a 474 prefix, this means "+32 474 xxx xxx". The means 10 is for this purpose connected to a suitable control system 40 which enables to initiate the test call according to instructions received from this control system 40. The control system 40 is for example a suitably programmed computer that is directly connected to the means 10, but it might also be a remote computer system that is connected to the means 10 by means of a suitable network interface, such as for example a LAN or the internet, to enable exchange of instructions and/or data through this networks. It is clear that the system 1 for detection of a bypass is not limited to a system with only one means 10, it can however comprise any suitable number of means 10 dispersed among any suitable number of outside telecommunication networks, such as for example eight means 10 for different telecommunication networks in France and three means 10 for roaming telecommunication network partners in Ghana.

As can be seen in Figure 1 the bypass detection system 1 also comprises a receiver probe 20. This receiver probe 20 can for example also be a GSM mobile phone or any other type of device with a subscription for terminating the test call. The receiver probe 20 can for example comprise a subscription to the telecommunication network 50 under test "+32 474 123 456". The receiver probe 20 is also connected to a suitable control system 40. The control system 40 receives from the receiver probe 20 call information comprising a received calling line identification (CLI) of the test call. It is clear that the system 1 is also not limited to a system with only one receiver probe 20. It can comprise any suitable number of receiver probes 20 with a subscription for terminating test calls.

The call information comprises a received CLI of the test call and optionally other data relating to the call such as for example the time and date the test call was exactly received, the time and date at which the test call started ringing, the time and date at which the test call was terminated, an indicator for whether the test call was picked up, the phone number associated with the means 20, the presentation indicator, ....

As shown in Figure 1 when no bypass is present the control system 40 initiates the test call by activating the means 10 which subsequently originates the test call by calling the subscription to the telecommunication network 50 under test in the receiver probe 20. The test call is then sent to the telecommunication network 50 under test, for example optionally via one or more carriers 60. Subsequently the test call passes interconnect 530 of the telecommunication network 50 under test who routes the test call to the receiver probe 20. The receiver probe 20 then receives the incoming test call. It is not required for the receiver probe 20 to actually answer the test call. The control system 40 could for example be configured in such a way that it instructs means 10 to initiate the test call to the receiver probe 20 and to automatically disconnect the test call after allowing three rings. The control system 40 then receives from the predetermined receiver probe 20 call information that comprises a received CLI, which is transmitted just before or after the first ring, and optionally other data concerning the test call. This could be done for example by downloading the call information from the receiver probe 20 to the control system 40 or by transmitting it to the control system 40 in any suitable way, by for example a wired or wireless connection means. The control system 40 then analyses the received CLI.

This analysis, as disclosed in prior art systems, can be executed as a simple comparison with the calling party number associated with means 10 that the control system 40 instructed to initiate the test call. In the case illustrated in Figure 1 where the test call passed through the interconnect facility 530 this received CLI, for example "+44 20 1234 5678", will match the calling party number, "+44 20 1234 5678", associated with means 10 and the control system 40 will be able to determine that for this test call no bypass was detected. This requires knowledge of the calling party number and also knowledge of the scheduling of the specific test calls as in this case information at the terminating side of the test call must be compared with information at the origination side of the specific test calls.

However according to the invention, as the means 10 originates the test call from outside the telecommunication network 50 under test, the analysis can be done with even more reduced complexity and increased reliability. It can be determined whether the received CLI is a call that originated from within the telecommunication network 50 under test, this means an on net call, by for example analysing whether the prefix of the received CLI differs from the prefix associated with the numbering plan of the telecommunication network 50 under test. If this analysis of the received CLI indicates the calling party of the test call is not from within the telecommunication network under test, no bypass was detected. Thus as soon as the analysis is able to ascertain that the received CLI does not belong to the numbering plan associated with the telecommunication network 50 under test, no bypass within the network under test was detected. In order to also take into account number portability the analysis could comprise a check if the received CLI comprises a number which is comprised in the number database of the telecommunication network 50 under test. If this is not the case, no bypass within the network under test was detected. In general, because the means 10 originates the test call from outside the telecommunication network 50 under test, the presence of a bypass can be detected if the received CLI belongs to a subscription to the telecommunication network 50 under test.

Another possibility for analysis is to check if the received CLI comprises the same country code as the country code associated the telecommunication network 50 under test. As the means 10 in many cases originates a test call from a country other than the one from the telecommunication network 50 under test this provides a tool for determining whether a bypass is present.

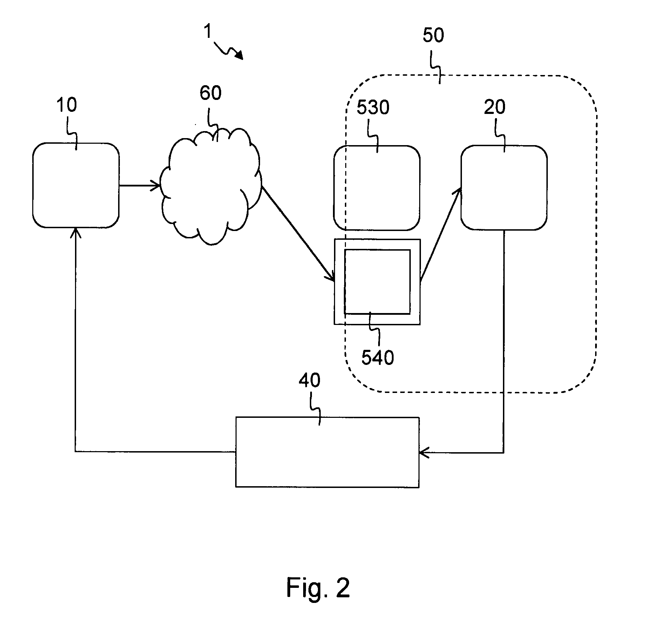

Figure 2 shows the same system 1 according to Figure 1 in operation, but now there is a bypass 540 in place and this bypass 540 reroutes the test call. When the control system 40 now initiates a test call between means 10 and receiver probe 20 and the call is rerouted optionally via one or more carriers 60 to the bypass 540 a detection of the bypass 540 is possible as explained below.

Such a bypass 540, also known as for example a GSM gateway or SIM box when it concerns a wireless telecommunication network or a leaky PBX when it concerns a wired telecommunication network, is operated by interconnection bypass operators that route part of the traffic to the telecommunication network 50 under test from outside telecommunication network 50 via for example a suitable internet interface with one of the carriers 60 towards a bypass 540 which normally makes use of a plurality of subscriptions, for example "+32 474 111 222", that operate within the telecommunication network 50 under test and which convert the incoming test call into a new call originating from a subscription to the telecommunication network 50, "+32 474 111 222", and to the same destination and as such bypass the interconnect 530. However when the control system 40 now receives the receiver call information from the receiver probe 20 that received the test call initiated from means 10 and then analyses the received CLI.

This analysis, as disclosed above with reference to Figure 1, in prior art systems, was executed as a comparison of the received CLI, "+32 474 111 222" with the calling party number, "+44 20 1234 5678", associated with means 10, which in this case will not match. This is because instead of the calling party number of means 10, the calling party number of one of the subscriptions in the bypass 540, "+32 474 111 222", will be in the CLI received by receiver probe 20. The control system 40 is then able to assess that a bypass 530 is present. This requires knowledge of the calling party number and also knowledge of the scheduling of the specific test calls as in this case information at the terminating side of the test call must be compared with information at the origination side of the specific test calls.

However according to the invention, as also explained above with reference to Figure 1, because the means 10 originates the test call from outside the telecommunication network 50 under test, the presence of a bypass 540 can be detected if the received CLI belongs to a subscription to the telecommunication network 50 under test. This can be implemented by checking whether the received CLI comprises a prefix which belongs to the numbering plan of the telecommunication network 50 under test "+32 474 xxx xxx" or when also taking into account number portability by checking whether the received CLI comprises a number which is comprised in the number database of the telecommunication network 50 under test. This reduces the complexity of the analysis and increases reliability. This also allows for flexibility in the means 10 that originate the test calls. As it is no longer necessary for the control system 40 to obtain call data from these means 10 or to be aware of the scheduling the specific test calls, the means 10 can be any means 10 that is able to originate a test call whether it is in a scheduled, unscheduled, automated, ad hoc or random way.

When the bypass 540 operator makes use of the CLIR function the system 1 would not be able to guarantee the detection of the presence and/or subsequent disabling of a bypass 540. The signals exchanged between telecommunication networks or within one telecommunication network when setting up a call namely comprise two fields, a CLI field which contains the calling party telephone number and a presentation indicator (PI) which indicates whether the CLI can be shown or not. The PI has three states: "available" means that there is a CLI and it can be shown, "unavailable" means that there is no CLI present and "restricted" means that there is a CLI present, but it cannot be shown to the destination subscription. When the bypass 540 operator enables the CLIR function for the subscriptions the bypass 540 makes use of, all calls from those subscriptions will be provided with a PI set to "restricted" and the last switch in the path will not pass on the CLI to the terminating subscription used in the receiver probe 20. A more detailed description of the CLIR function can for example be found in the ITU CCITT I.251.4 specification or the 3GPP TS 24.081 specification.

Therefore the system according to the invention makes use of a receiver probe 20 that comprises a subscription to the telecommunications network 50 under test configured with a calling line identification restriction override (CLIRO) function. This is a feature implemented in the equipment of the telecommunication network 50. The feature will typically instruct the final switch in the path of the test call to ignore the PI if it is set to "restricted" and still pas on the CLI to the terminating subscription of the receiver probe 20. Then, even if the bypass 540 makes use of a CLIR function the receiver probe 20 will always be able to detect the CLI of the incoming test call. This will enable the system 1 to detect and/or subsequently disable the specific subscriptions that are in use in the bypass 540.

In general the method for detecting the bypass 540 of the interconnect 530 to a telecommunication network 50 under test comprises the following steps:
- the means 10 originate the test call to said telecommunication network 50 under test from outside the telecommunication network 50 under test;
- the at least one receiver probe 20 with a subscription configured with CLIRO terminates said test call; and
- the control system 40 initiates the test call; receives from the receiver probe 20 call information comprising a received CLI of the test call; and detects the presence of the bypass 540 by analysing the received CLI.

In order to continuously monitor the telecommunication network 50 under test for the existence of a bypass 540 for its interconnects 530 with outside telecommunication networks the system 1 can initiate, originate, receive and analyse a plurality of test calls between a plurality of means 10 and a plurality of receiver probes 20. These receiver probes 20 each comprise a respective subscription to the telecommunication network 50 under test. Upon receiving from the plurality of receiver probes 20 the respective received CLI of the test calls, the control system 40 will analyse the respective received CLI as described above in order to detect the presence of a bypass 540.

As still a further refinement in order to allocate more resources of the system 1 to certain routes towards the telecommunication network 50 under test where the risk for bypass systems 540 is higher, it is advantageous for the control system to initiate first a scan phase wherein a relatively low amount of test calls is initiated at a first rate, for example fifty calls at a rate of five test calls per day, in order to identifying suspect routes with an interconnect bypass. The control system 40 subsequently initiates a shoot phase wherein a higher amount of test calls is scheduled at a second rate, for example one thousand test calls at a rate of ten test calls per hour, only on these identified suspect routes. This then enables to identify as fast as possible as many as possible of the subscriptions used by the bypass 540 operating on these suspect routes in order to allow for subsequent disabling of these subscriptions.

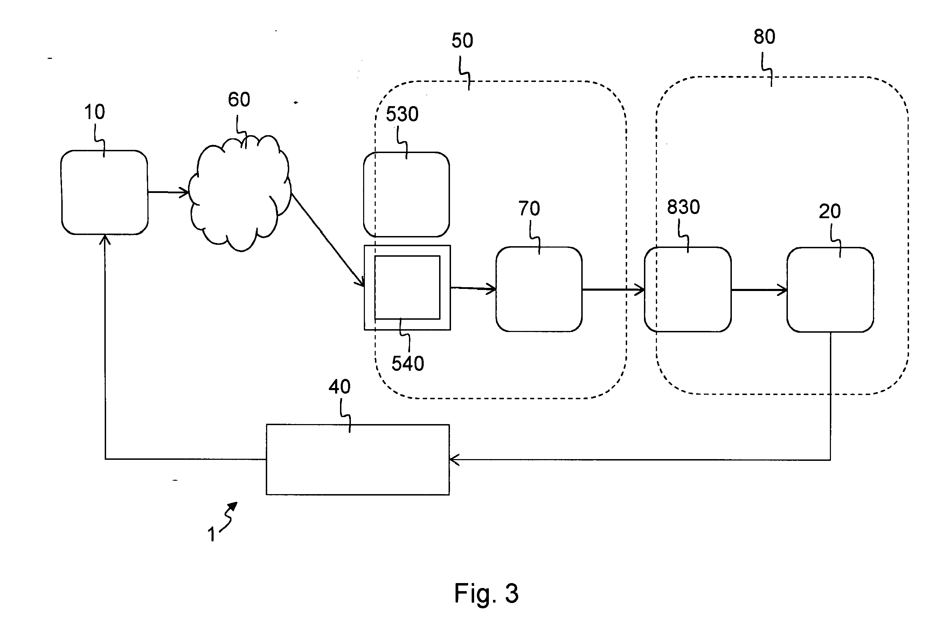

According to an advantageous embodiment of the invention illustrated in Figure 3, it is not essential that the subscription configured with the CLIRO is comprised within the telecommunication network 50 under test. In this case the receiver probe 20 comprising the subscription with CLIRO forms part of a telecommunication network 80 different from the telecommunication network 50 under test. This could be for example because for the telecommunication network 50 under test there was no subscription with CLIRO available. In this case when a test call is initiated by the control system 40, means 10 originates a test call to a subscription 70 within the telecommunication network 50 under test. This subscription 70, also referred to as a forwarding subscription 70, however forwards the test call, via the interconnect 830 of telecommunication network 80, to the receiver probe 20 for terminating the test call, for example by putting the forwarding subscription 70 in unconditional forward mode. In this case similar as in Figure 2 the received CLI is provided by the receiver probe 20 to the control system for analysis even if the bypass 540 makes use of CLIR because the receiver probe 20 is provided with a subscription with CLIRO. Also in this case a similar analysis as in the embodiment in Figures 1 and 2 will enable detection of the bypass 540.

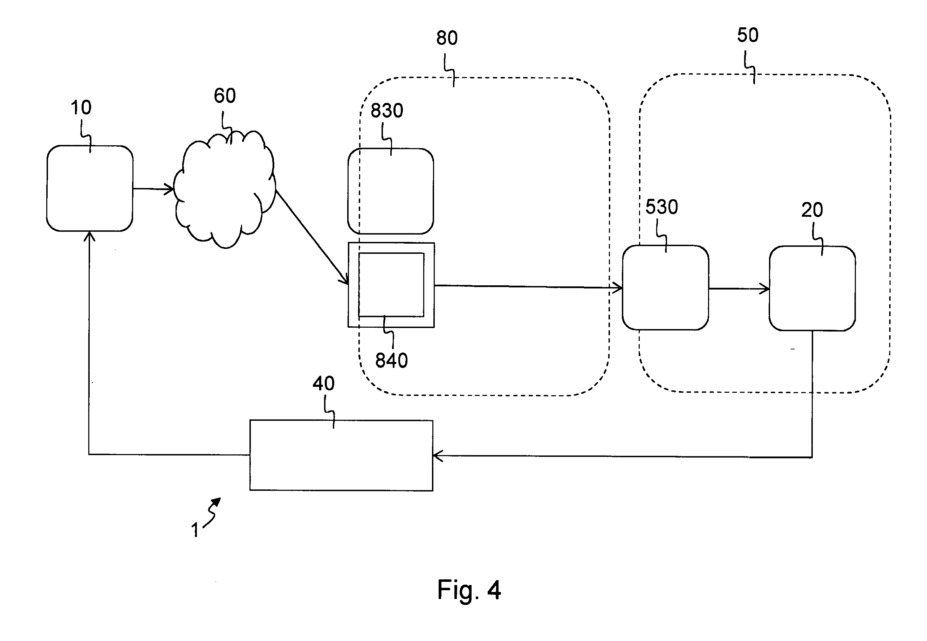

Figure 4 shows an alternative embodiment of the system 1 according to the invention. In this scenario the control system 40 initiates a call through the use of means 10 from outside the telecommunication network 50 under test to the receiver probe 20 with a CLIRO subscription to the telecommunication network 50 under test. In this case the call is routed, optionally via one or more carriers 60, to a bypass 840 that makes use of subscriptions to telecommunication network 80 other than the telecommunication network 50 under test, which we will refer to as a further telecommunication network 80 under test. It is clear that the means 10 additionally initiates the test call from outside this further telecommunication network 80 under test. The bypass 840 of the interconnect 830 of this further telecommunication network 80 under test converts the incoming test call into a new call originating from a subscription to the further telecommunication network 80 under test to the same subscription in receiver probe 20. This further telecommunication network 80 under test then routes the test call to the interconnect 530 of the telecommunication network 50 under test and subsequently the test call gets terminated on receiver probe 20 with a CLIRO subscription. The bypass 840 in this way bypasses the interconnect 830 from this further telecommunication network 80 under test. The control system 40 then receives the call information related to this test call from the receiver probe 20 and starts analysing the received CLI in order to determine the presence of the so called 'other operator' bypass 840, by advantageously checking whether the received CLI belongs to a subscription to this further telecommunication network 80 under test. Normally this scenario only occurs when the telecommunication network 50 under test and the further telecommunication network 80 under test are in the same country. Therefore also in this embodiment a simple analysis of the country code of the received CLI or alternatively an analysis whether the received CLI comprises a prefix which belongs to the numbering plan associated with the further telecommunication network 80 under test would enable the control system 40 to detect the bypass 840. Generally the bypass 840 is detected if the received CLI belongs to a subscription to this further telecommunication network 80 under test. In this case the operator of the telecommunication network 50 under test receives an interconnect charge from the operator of the further network 80 under test because its interconnect 530 is used, but all the above mentioned quality problems associated with the presence of a bypass remain present in this embodiment.

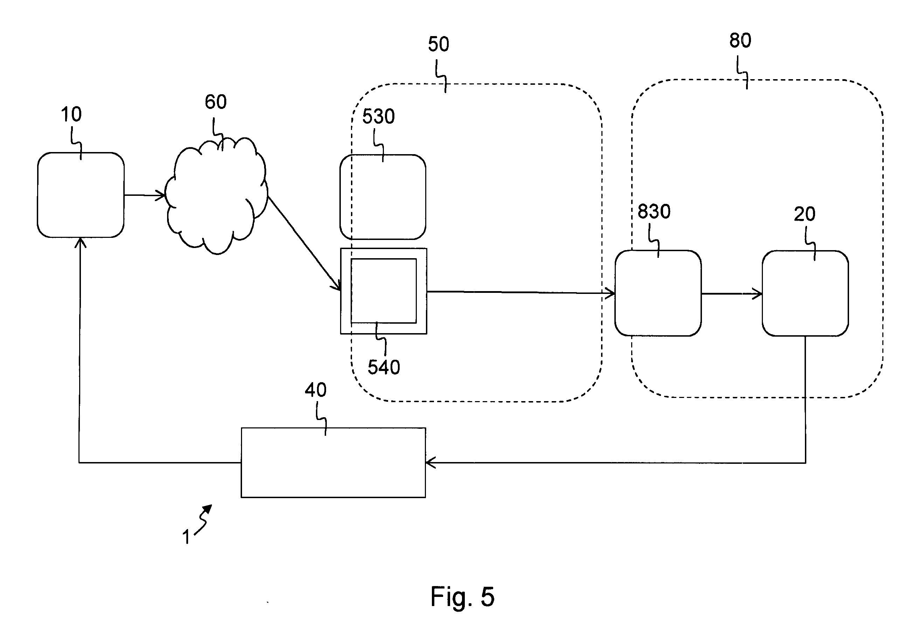

Figure 5 shows a further embodiment of the system 1 according to the invention. It is clear that the situation in the embodiment of Figure 5 is analogous to the embodiment of Figure 4, but here the bypass 540 makes use of subscriptions to the telecommunication network 50 under test and the receiver probe 20 is located in the further telecommunication network 80 under test, other then the telecommunication network 50 under test. This means that the receiver probe 20 comprises a subscription to this further telecommunication network 80 under test. This is a situation that can for example arise if there are available in the telecommunication network under test 50 subscriptions with retail rates that are lower than the interconnection rate to the further telecommunication network 80 under test. After receiving from the receiver probe 20 the received CLI the control system 40 can start the analysis in order to ascertain the presence of a so called 'off net' bypass 540. As explained above also in this embodiment a simple and robust analysis can be performed because the control system 40 would be able to ascertain the presence of an off net bypass 540 based on a portion of the CLI that is indicative of the telecommunication network 50. If this portion is present in the CLI, the control system 40 has detected a bypass 540, because for the bypass 540 to bypass the interconnection 530 of the telecommunication network 50 under test, in this embodiment, it operates with subscriptions to this telecommunication network 50 under test. Another possibility for analysis by the control system 40 could be to check whether the received CLI belongs to the number database associated with the telecommunication network 50 under test as this would then allow to take into account number portability. Also in this embodiment a simple analysis of the country code of the received CLI or alternatively an analysis whether the received CLI comprises a prefix which belongs to the numbering plan associated with the telecommunication network 50 under test would enable the control system 40 to detect the bypass 540 because for the bypass 540 to bypass the interconnection 530 of the telecommunication network 50 under test, in this embodiment, it operates with subscriptions to this telecommunication network 50 under test. Generally the bypass 540 can be detected if the received CLI belongs to a subscription to a telecommunication network 50.

It is clear that the control system 40 and the telecommunication network under test 50 can be located in the same country or could be in a different country. Receiver probe 20 and telecommunication network under test 50 are normally in the same country', although in case of a mobile telecommunication network under test 50, probe 20 could be located outside this telecommunication network 50 under test with the CLIRO subscription to the telecommunication network under test 50 thus roaming on another network in another country. It is further also possible that the control system 40 is formed as a central system located on one site or alternatively as a geographically distributed system, in this case the functionality of control system 40 could for example be located within the receiver probe 20 or within the means 10. It is also clear that the control system 40 analyses the CLI information obtained through the CLIRO subscription.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof.

As such, for example, the embodiment shown in Figure 5 can be further elaborated with the concept shown in Figure 3 if for example no subscription with CLIRO would be available in telecommunication network 80. It is further not essential for the telecommunication network 50 under test and the telecommunication network 80 to be in the same country.

The system for detection of bypass according to the invention as described above can also be advantageously used as a CLI based call quality check system. In this context the system will be able to detect quality problems related to the received CLI of the test calls if for example the control system 40 receives from the receiver probe 20 a received calling line identification that belongs to a subscription to the telecommunication network 50 under test. It is clear that also the other embodiments of the bypass detection system described above could equally form a suitable basis for a CLI based call quality check system.

The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system (1) for detection of a bypass (540, 840) of an interconnect (530, 830) to a telecommunication network (50, 80), the system (1) comprising:
• means (10) adapted to originate a test call to or through a telecommunication network (50) under test from outside the telecommunication network (50) under test;
• at least one receiver probe (20) with a subscription for terminating the test call, the subscription being configured with calling line identification restriction override CLIRO; and
• a control system (40) configured to:
∘ initiate the test call;
∘ receive from the receiver probe (20) call information comprising a received calling line identification CLI of the test call; and
∘ detect the presence of the bypass (540, 840) by analysing the received calling line identification CLI,
CHARACTERISED IN THAT
the control system (40) is further configured to detect the presence of the bypass (540) if the received calling line identification CLI belongs to a subscription to the telecommunication network (50) under test.

2. A system according to claim 1, **characterised in that** the subscription of the receiver probe (20) is a subscription to the telecommunication network (50) under test.

3. A system according to claim 1, **characterised in that**:
• the subscription of the receiver probe (20) is a subscription to a telecommunication network (80) other than the telecommunication network (50) under test; and
• the telecommunication network (50) under test comprises a forwarding subscription (70) which forwards the test call to the receiver probe (20).

4. A system according to any one of the claims 1 to 3, **characterised in that**:
• the means (10) is further adapted to originate the test call to or through the telecommunication network (50) under test from outside the telecommunication network (50) under test, and additionally from outside a further telecommunication network (80) under test,
∘ the further telecommunication network (80) under test being a telecommunication network other than the telecommunication network (50) under test; and
• the control system (40) is further configured to detect the presence of the bypass (840) if the received calling line identification CLI belongs to a subscription to the further telecommunication network (80) under test.

5. A system according to claim 4 when dependent on claim 1, **characterised in that**
• the subscription of the receiver probe (20) is a subscription to the further telecommunication network (80) under test; and
• the means (10) is further adapted to originate the test call to the subscription of the receiver probe (20);
• the control system (40) is further configured to detect the presence of an off-net bypass (540) if the received calling line identification CLI belongs to a subscription to the telecommunication network (50) under test.

6. A system according to any of the claims 1 to 5, **characterised in that** the control system (40) is configured to detect the presence of the bypass (540, 840) if the received calling line identification CLI comprises a prefix which belongs to the numbering plan of the telecommunication network (50, 80) under test.

7. A system according to any of the claims 1 to 5, **characterised in that** the control system (40) is configured to detect the presence of the bypass (540, 840) if the received calling line identification CLI comprises a number which is comprised in the number database of the telecommunication network (50, 80) under test.

8. A system according to any of the claim 1 to 5, **characterised in that** the telecommunication network (50, 80) under test is located in a country with an associated country code, the means (10) is adapted to originate the test call from a country other than the country of the telecommunication network (50, 80) under test, and the control system is further configured to detect the presence of the bypass (540, 840) if the received calling line identification CLI comprises the same country code as the country code associated with the telecommunication network (50, 80) under test.

9. A method for detecting a bypass (540, 840) of an interconnect (530, 830) to a telecommunication network (50, 80), the method comprising the steps of:
• a means (10) originating a test call to or through the telecommunication network (50) under test from outside the telecommunication network (50) under test;
• at least one receiver probe (20) with a subscription being configured with calling line identification restriction override CLIRO terminating the test call; and
• a control system (40) initiating the test call; receiving from the receiver probe (20) call information comprising a received calling line identification CLI of the test call; and detecting the presence of the bypass (540, 840) by analysing the received calling line identification CLI,
CHARACTERISED IN THAT
the control system (40) detects the presence of the bypass (540) if the received calling line identification CLI belongs to a subscription to the telecommunication network (50) under test.

10. A method according to claim 9, **characterised in that** the method further comprises the steps of initiating, originating, receiving and analysing a plurality of test calls between a plurality of means (10) and a plurality of predetermined receiver probes (20).

11. A method according to claim 10, **characterised in that** the method further comprises the steps of:
• a scan phase wherein a first amount of the plurality of test calls is initiated at a first rate thereby identifying a bypass (540); and
• a shoot phase wherein a second amount of the plurality of test calls is initiated at a second rate only using predetermined means (10) and predetermined receiver probes (20) that are capable of passing through the bypass (540) identified in the scan phase, the second amount and rate being higher than the first amount and rate respectively.

12. A control system (40) for use in a system according to any of the claims 1 to 8, the control system (40) being configured to:
• receive call information comprising a received calling line identification CLI of the test call from the receiver probe (20) comprising the subscription for terminating the test call, the subscription being configured with calling line identification restriction override CLIRO;
• detect the presence of the bypass (540, 840) by analysing the received calling line identification CLI,
CHARACTERISED IN THAT
the control system (40) is further configured to detect the presence of the bypass (540, 840) if the received calling line identification CLI belongs to a subscription to the telecommunication network (50) under test.

13. A receiver probe (20) for use in a system according to any of the claims 1 to 8, **characterised in that** the receiver probe (20) comprises the control system (40) according to claim 12.

## Patentansprüche

1. System (1) für die Erkennung eines Bypasses (540, 840) einer Zusammenschaltung (530) mit einem Telekommunikationsnetz (50, 80), wobei das System folgendes umfasst:
• ein Mittel (10), das angepasst ist, einen Testanruf an oder durch ein Test-Telekommunikationsnetz (50) von außerhalb des Test-Telekommunikationsnetzes (50) zu generieren;
• wenigstens einen Empfangsprüfkopf (20) mit einem Abonnement zum Abschließen des Testanrufs, wobei das Abonnement mit einem Rufnummernunterdrückungs-Override CLIRO konfiguriert ist; und
• ein Steuersystem (40), das konfiguriert ist, um:
∘ den Testanruf zu starten;
∘ vom Empfangsprüfkopf (20) eine Anrufinformation zu empfangen, die eine Rufnummernanzeige CLI umfasst; und
∘ das Vorhandensein des Bypasses (540, 840) durch die Analyse der empfangenen Rufnummernanzeige CLI zu erkennen,
**dadurch gekennzeichnet, dass**
das Steuersystem (40) darüber hinaus konfiguriert ist, um das Vorhandensein des Bypasses (540) zu erkennen, wenn die empfangene Rufnummernanzeige CLI zu einem Abonnement des Test-Telekommunikationsnetzes (50) gehört.

2. System nach Anspruch 1, **dadurch gekennzeichnet, dass** das Abonnement des Empfangsprüfkopfes (20) ein Abonnement für das Test-Telekommunikationsnetz (50) ist.

3. System nach Anspruch 1, **dadurch gekennzeichnet, dass**:
• das Abonnement des Empfangsprüfkopfes (20) ein Abonnement für ein anderes Telekommunikationsnetz (80) als das Test-Telekommunikationsnetz (50) ist; und
• das Test-Telekommunikationsnetz (50) ein Weiterleitungsabonnement (70) umfasst, das den Testanruf zum Empfangsprüfkopf (20) weiterleitet.

4. System nach irgendeinem der Ansprüche 1 bis 3, **dadurch gekennzeichnet, dass**:
• das Mittel (10) darüber hinaus angepasst ist, den Testanruf an oder durch ein Test-Telekommunikationsnetz (50) von außerhalb des Test-Telekommunikationsnetzes (50) zu generieren, und zusätzlich von außerhalb eines weiteren Telekommunikationsnetzes (80),
∘ wobei das weitere Test-Telekommunikationsnetz (80) ein anderes Telekommunikationsnetz ist, als das Test-Telekommunikationsnetz (50); und
• das Steuersystem (40) darüber hinaus konfiguriert ist, um das Vorhandensein des Bypasses (840) zu erkennen, wenn die empfangene Rufnummernanzeige CLI zu einem Abonnement für das weitere Test-Telekommunikationsnetz (80) gehört.

5. System nach Anspruch 4, wenn von Anspruch 1 abhängig, **dadurch gekennzeichnet, dass**
• das Abonnement des Empfangsprüfkopfes (20) ein Abonnement für das weitere Test-Telekommunikationsnetz (80) ist; und
• das Mittel (10) darüber hinaus angepasst ist, den Testanruf zum Abonnement des Empfangsprüfkopfes (20) zu generieren;
• das Steuersystem (40) darüber hinaus konfiguriert ist, um das Vorhandensein eines Off-Net-Bypasses (540) zu erkennen, wenn die empfangene Rufnummernanzeige CLI zu einem Abonnement für das Test-Telekommunikationsnetz (50) gehört.

6. System nach irgendeinem der Ansprüche 1 bis 5, **dadurch gekennzeichnet, dass** das Steuersystem (40) konfiguriert ist, um das Vorhandensein des Bypasses (540, 840) zu erkennen, wenn die empfangene Rufnummernanzeige CLI eine Vorwahl umfasst, die im Telefonnummernplan des Test-Telekommunikationsnetzes (50, 80) enthalten ist.

7. System nach irgendeinem der Ansprüche 1 bis 5, **dadurch gekennzeichnet, dass** das Steuersystem konfiguriert ist, um das Vorhandensein des Bypasses (540, 840) zu erkennen, wenn die empfangene Rufnummernanzeige CLI eine Nummer umfasst, die in der Nummern-Datenbank des Test-Telekommunikationsnetzes (50, 80) enthalten ist.

8. System nach irgendeinem der Ansprüche 1 bis 5, **dadurch gekennzeichnet, dass** das Test-Telekommunikationsnetz (50, 80) in einem Land mit einem zugeordneten Ländercode angesiedelt ist, das Mittel (10) angepasst ist, um den Testanruf aus einem anderen Land, als dem Land des Test-Telekommunikationsnetzes (50, 80) zu generieren, und das Steuersystem darüber hinaus konfiguriert ist, um das Vorhandensein des Bypasses (540, 840) zu erkennen, wenn die empfangene Rufnummernanzeige CLI denselben Ländercode enthält, wie der Ländercode, der dem Test-Telekommunikationsnetz (50, 80) zugeordnet ist.

9. Verfahren zur Erkennung eines Bypasses (540, 840) einer Zusammenschaltung (530, 830) mit einem Telekommunikationsnetz (50, 80), wobei das Verfahren folgende Schritte umfasst:
• ein Mittel (10), das einen Testanruf in ein Test-Telekommunikationsnetz (50) von außerhalb des Test-Telekommunikationsnetzes (50) generiert; und
• zumindest einen Empfangsprüfkopf (20) mit einem Abonnement, das mit einem Rufnummernunterdrückungs-Override CLIRO zum Abschließen des Testanrufs konfiguriert ist; und
• ein Steuersystem (40) zum Initiieren des Testanrufs; zum Empfangen einer Anrufinformation vom Empfangsprüfkopf (20), die eine Rufnummernanzeige CLI des empfangenen Testanrufs umfasst; und zum Erkennen des Vorhandenseins des Bypasses (540, 840) durch die Analyse der empfangenen Rufnummernanzeige CLI,
**dadurch gekennzeichnet, dass**
das Steuersystem (40) das Vorhandensein des Bypasses (540) erkennt, wenn die empfangene Rufnummernanzeige CLI zu einem Abonnement für das Test-Telekommunikationsnetz (50) gehört.

10. Verfahren nach Anspruch 9, **dadurch gekennzeichnet, dass** das Verfahren darüber hinaus den Schritt der Initiierung, der Generierung, des Empfangs und der Analyse einer Vielzahl von Testanrufen zwischen einer Vielzahl von Mitteln (10) und einer Vielzahl von vorbestimmten Empfangsprüfköpfen (20) umfasst.

11. Verfahren nach Anspruch 10, **dadurch gekennzeichnet, dass** das Verfahren darüber hinaus den folgenden Schritt umfasst:
• eine Scan-Phase, wobei eine erste Anzahl der Vielzahl an Testanrufen bei einem ersten Grad initiiert wird und dabei ein Bypass (540) identifiziert wird; und
• eine Aufnahme-Phase, wobei eine zweite Anzahl der Vielzahl an Testanrufen bei einem zweiten Grad initiiert wird, nur unter Verwendung des vorbestimmten Mittels (10) und der vorbestimmten Empfangsprüfköpfe (20), die in der Lage sind, den Bypass (540) zu durchqueren, der in der Scan-Phase identifiziert wurde, wobei die zweite Anzahl und der zweite Grad größer sind, als jeweils die erste Anzahl und der erste Grad.

12. Steuersystem (40) zur Verwendung in einem System nach irgendeinem der Ansprüche 1 bis 8, wobei das Steuersystem (40) konfiguriert ist, um:
• Anrufinformationen zu erhalten, die eine Rufnummernanzeige CLI des Testanrufs vom Empfangsprüfkopf (20) umfasst, der das Abonnement zum Abschließen des Testanrufs umfasst, wobei das Abonnement mit einem Rufnummernunterdrückungs-Override CLIRO konfiguriert ist;
• das Vorhandensein des Bypasses (540, 840) durch die Analyse der empfangenen Rufnummernanzeige CLI zu erkennen,
**dadurch gekennzeichnet, dass**
das Steuersystem (40) darüber hinaus konfiguriert ist, um das Vorhandensein des Bypasses (540, 840) zu erkennen, wenn die empfangene Rufnummernanzeige CLI zu einem Abonnement für das Test-Telekommunikationsnetz (50) gehört.

13. Empfangsprüfkopf (20) zur Verwendung in einem System nach irgendeinem der Ansprüche 1 bis 8, **dadurch gekennzeichnet, dass** der Empfangsprüfkopf (20) das Steuersystem (40) nach Anspruch 12 umfasst.

## Revendications

1. Système (1) pour la détection d'une dérivation (540, 840) d'une interconnexion (530, 830) à un réseau de télécommunication (50, 80), le système (1) comprenant :
• un moyen (10) adapté pour émettre un appel d'essai à ou à travers un réseau de télécommunication (50) sous essai à partir de l'extérieur du réseau de télécommunication (50) sous essai ;
• au moins une sonde réceptrice (20) avec un abonnement pour terminer l'appel d'essai, l'abonnement étant configuré avec annulation de restriction d'identification de ligne appelante CLIRO, et
• un système de commande (40) configuré pour :
∘ déclencher l'appel d'essai ;
∘ recevoir, à partir de la sonde réceptrice (20), des informations d'appel comprenant une identification de ligne appelante reçue CLI de l'appel d'essai ; et
∘ détecter la présence de la dérivation (540, 840) en analysant l'identification de ligne appelante reçue CLI,
**caractérisé en ce que**
le système de commande (40) est en outre configuré pour détecter la présence de la dérivation (540) si l'identification de ligne appelante reçue CLI appartient à un abonnement au réseau de télécommunication (50) sous essai.

2. Système selon la revendication 1, **caractérisé en ce que** l'abonnement de la sonde réceptrice (20) est un abonnement au réseau de télécommunication (50) sous essai.

3. Système selon la revendication 1, **caractérisé en ce que** .
• l'abonnement de la sonde réceptrice (20) est un abonnement à un réseau de télécommunication (80) autre que le réseau de télécommunication (50) sous essai ; et
• le réseau de télécommunication (50) sous essai comprend un abonnement de renvoi (70) qui renvoie l'appel d'essai à la sonde réceptrice (20).

4. Système selon une quelconque des revendications 1 à 3, **caractérisé en ce que** :
• le moyen (10) est en outre adapté pour émettre l'appel d'essai à ou à travers le réseau de télécommunication (50) sous essai à partir de l'extérieur du réseau de télécommunication (50) sous essai, et à partir de l'extérieur d'un réseau de télécommunication supplémentaire (80) sous essai,
∘ le réseau de télécommunication supplémentaire (80) sous essai étant un réseau de télécommunication autre que le réseau de télécommunication (50) sous essai ; et
• le système de commande (40) est en outre configuré pour détecter la présence de la dérivation (840) si l'identification de ligne appelante reçue CLI appartient à un abonnement au réseau de télécommunication supplémentaire (80) sous essai.

5. Système selon la revendication 4 lorsqu'elle dépend de la revendication 1, **caractérisé en ce que**
• l'abonnement de la sonde réceptrice (20) est un abonnement au réseau de télécommunication supplémentaire (80) sous essai ; et
• le moyen (10) est en outre adapté pour émettre l'appel d'essai à l'abonnement de la sonde réceptrice (20) ;
• le système de commande (40) est en outre configuré pour détecter la présence d'une dérivation hors réseau (540) si l'identification de ligne appelante reçue CLI appartient à un abonnement au réseau de télécommunication (50) sous essai.

6. Système selon une quelconque des revendications 1 à 5, **caractérisé en ce que** le système de commande (40) est configuré pour détecter la présence de la dérivation (540, 840) si l'identification de ligne appelante reçue CLI comprend un préfixe qui appartient au plan de numérotation du réseau de télécommunication (50, 80) sous essai.

7. Système selon une quelconque des revendications 1 à 5, **caractérisé en ce que** le système de commande (40) est configuré pour détecter la présence de la dérivation (540, 840) si l'identification de ligne appelante reçue CLI comprend un numéro qui est compris dans la base de données de numéros du réseau de télécommunication (50, 80) sous essai.

8. Système selon une quelconque des revendications 1 à 5, **caractérisé en ce que** le réseau de télécommunication (50, 80) sous essai est localisé dans un pays avec un code de pays associé, le moyen (10) est adapté pour émettre l'appel d'essai à partir d'un pays autre que le pays du réseau de télécommunication (50, 80) sous essai, et le système de commande est en outre configuré pour détecter la présence de la dérivation (540, 840) si l'identification de ligne appelante reçue CLI comprend le même code de pays que le code de pays associé au réseau de télécommunication (50, 80) sous essai.

9. Procédé pour détecter une dérivation (540, 840) d'une interconnexion (530, 830) à un réseau de télécommunication (50, 80), le procédé comprenant les étapes de :
• un moyen (10) émettant un appel d'essai à ou à travers le réseau de télécommunication (50) sous essai à partir de l'extérieur du réseau de télécommunication (50) sous essai ;
• au moins une sonde réceptrice (20) avec un abonnement étant configuré avec annulation de restriction d'identification de ligne appelante CLIRO terminant l'appel d'essai ; et
• un système de commande (40) déclenchant l'appel d'essai ; recevant, à partir de la sonde réceptrice (20), des informations d'appel comprenant une identification de ligne appelante reçue CLI de l'appel d'essai ; et détectant la présence de la dérivation (540, 840) en analysant l'identification de ligne appelante reçue CLI,
**caractérisé en ce que**
le système de commande (40) détecte la présence de la dérivation (540) si l'identification de ligne appelante reçue CLI appartient à un abonnement au réseau de télécommunication (50) sous essai.

10. Procédé selon la revendication 9, **caractérisé en ce que** le procédé comprend en outre les étapes du déclenchement, de l'émission, de la réception et de l'analyse d'une pluralité d'appels d'essai entre une pluralité d'un moyen (10) et une pluralité de sondes réceptrices prédéterminées (20).

11. Procédé selon la revendication 10, **caractérisé en ce que** le procédé comprend en outre les étapes de :
• une phase de balayage dans laquelle une première quantité de la pluralité d'appels d'essai est déclenchée à un premier rythme, identifiant ainsi une dérivation (540) ; et
• une phase de tir dans laquelle une seconde quantité de la pluralité d'appels d'essai est déclenchée à un second rythme en utilisant seulement un moyen prédéterminé (10) et des sondes réceptrices prédéterminées (20) qui son capables de passer à travers la dérivation (540) identifiée dans la phase de balayage, la seconde quantité et le second rythme étant supérieurs à la première quantité et au premier rythme, respectivement.

12. Système de commande (40) destiné à être utilisé dans un système selon une quelconque des revendications 1 à 8, le système de commande (40) étant configuré pour :
• recevoir des informations d'appel comprenant une identification de ligne appelante reçue CLI de l'appel d'essai à partir de la sonde réceptrice (20) comprenant l'abonnement pour terminer l'appel d'essai, l'abonnement étant configuré avec annulation de restriction d'identification de ligne appelante CLIRO ;
• détecter la présence de la dérivation (540, 840) en analysant l'identification de ligne appelante reçue CLI,
**caractérisé en ce que**
le système de commande (40) est en outre configuré pour détecter la présence de la dérivation (540, 840) si l'identification de ligne appelante reçue CLI appartient à un abonnement au réseau de télécommunication (50) sous essai.

13. Sonde réceptrice (20) destinée à être utilisée dans un système selon une quelconque des revendications 1 à 8, **caractérisée en ce que** la sonde réceptrice (20) comprend le système de commande (40) selon la revendication 12.
